# EUROPEAN PATENT SPECIFICATION

(11) **EP 3 816 050 B1**
(45) Date of publication and mention of the grant of the patent: **01.01.2025**
(21) Application number: 20204786.6
(22) Date of filing: 29.10.2020
(51) Int. Cl.: B64D 11/06

(54) **DISPLAY BEZEL WITH PLUGIN ACCESSORIES**
ANZEIGEBLENDE MIT STECKZUBEHÖR
CADRE D'AFFICHAGE COMPORTANT DES ACCESSOIRES DE PLUGICIEL

(30) Priority: 29.10.2019 US 201916667161
(43) Date of publication of application: 05.05.2021
(73) Proprietor: B/E Aerospace, Inc., Winston Salem, NC 27105 (US)
(72) Inventor: MALECHA, Jeremy F., Pfafftown, NC 27040 (US); LOMBARDO, Mary Theresa, Windsor, CT 06095 (US)
(74) Representative: Dehns

(56) References cited:
- WO-A1-2011/070516
- WO-A1-2015/002609
- US-A1- 2008 138 039
- US-A1- 2011 278 885
- US-A1- 2017 021 931
- US-B1- 6 409 137

## Description

### BACKGROUND

With limited space allotted to each passenger in a commercial aircraft, stowage areas for storing personal items (e.g., laptops, tablets, mobile devices, food, beverages), are important to ensure passenger comfort and satisfaction. For example, tray tables disposed within the seatback of aircraft passenger seats allow passengers a surface on which to rest personal items, such as a laptop and a beverage. However, using a tray table to hold a beverage may limit the passenger's ability to utilize the tray table for other purposes or personal items, such as a newspaper or laptop. Additionally, a tray table may only be utilized to hold a beverage when the tray table is in the "open" position. Thus, many conventional aircraft seatbacks do not allow a passenger options to hold a beverage when the tray table is in a "closed" position. Furthermore, many passengers may begin to feel confined when the tray table is in the "open" position for long periods of time, further limiting their ability to store personal items for such periods of time.

In order to address the inability to hold personal items when the tray table is in a "closed" position, other conventional tray tables include a foldable "ring" within the tray table itself, which may be folded down when the tray table is in the "closed" position in order to hold a beverage. However, this conventional design once again limits a passenger's ability to store personal items, as the foldable ring may only be used when the tray table is in the "closed" position. Apparatus for holding accessories are described in US 2011/27885, WO 2015/002609, WO 2011/070516, US 2008/138039, US 2017/0021931 and US 6, 409, 137.

Therefore, there exists a need in the art for a system which cures one or more of the shortfalls of previous approaches identified above.

### SUMMARY

An aircraft passenger seat apparatus is provided as defined by claim 1.

In some embodiments of the aircraft passenger seat apparatus, the at least one interfacing component of the one or more accessory stations are disposed within an interior surface of the one or more plug-in receptacles.

In some embodiments of the aircraft passenger seat apparatus, the at least one interfacing component includes at least one interlocking component, the at least one interlocking component including at least one of a groove, a detent, or a tab.

In some embodiments of the aircraft passenger seat apparatus, the interfacing assembly includes at least one of a magnetic interfacing assembly, a tongue-and-groove interlocking assembly, or a tab-and-slot interlocking assembly.

In some embodiments of the aircraft passenger seat apparatus, the one or more couplable accessories include a cupholder accessory.

In some embodiments of the aircraft passenger seat apparatus, the one or more couplable accessories include a phone holder accessory.

In some embodiments of the aircraft passenger seat apparatus, the aircraft passenger seat apparatus further includes one or more wireless chargers disposed within the seatback bezel, the one or more wireless chargers configured to wirelessly charge a mobile device disposed within the phone holder accessory.

In some embodiments of the aircraft passenger seat apparatus, the seatback bezel includes a display monitor bezel, wherein the display monitor bezel surrounds at least a portion of the display monitor.

In some embodiments of the aircraft passenger seat apparatus, the aircraft passenger seat apparatus further includes one or more electronic components disposed within the display monitor bezel, the one or more electronic components electrically coupled to the display monitor.

In some embodiments of the aircraft passenger seat apparatus, the one or more electronic components are configured to: form a communicative coupling with a mobile device held by a couplable accessory disposed within the one or more accessory stations, and generate one or more control signals configured to cause the display monitor to display one or more images based on the communicative coupling.

In some embodiments of the aircraft passenger seat apparatus, the one or accessory stations include a first accessory station with a first set of structural characteristics, and a second accessory station including a second set of structural characteristics identical to the first set of structural characteristics.

In some embodiments of the aircraft passenger seat apparatus, the external force comprises an external force which is substantially orthogonal to the aircraft seatback.

In some embodiments of the aircraft passenger seat apparatus, the one or more accessory stations are disposed within the seatback bezel adjacent to a tray table disposed on the aircraft seatback.

A seat apparatus is disclosed. In embodiments, the seat apparatus includes a seatback panel of a seatback, and one or more accessory stations disposed in the seatback panel, the one or more accessory stations configured to at least partially receive and couple with one or more couplable accessories. The seat apparatus may further include at least one interfacing component of an interfacing assembly disposed in the one or more accessory stations, the at least one interfacing component configured to engage and mate with the least one interfacing component of the one or more couplable accessories, wherein the interfacing assembly is configured to secure the one or more couplable accessories within the one or more accessory stations until an external force acts upon the one or more couplable accessories.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are provided for example and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1 illustrates a front elevation view of an aircraft passenger seat apparatus, in accordance with one or more embodiments of the present disclosure.
FIG. 2 illustrates a perspective view of an accessory station and a couplable accessory of an aircraft passenger seat apparatus, in accordance with one or more embodiments of the present disclosure.
FIG. 3A illustrates a perspective view of an aircraft passenger seat apparatus including a cupholder accessory, in accordance with one or more embodiments of the present disclosure.
FIG. 3B illustrates a perspective view of an aircraft passenger seat apparatus including a cupholder accessory, in accordance with one or more embodiments of the present disclosure.
FIG. 4 illustrates a perspective view of an aircraft passenger seat apparatus including a phone holder accessory, in accordance with one or more embodiments of the present disclosure.
FIG. 5A illustrates a front perspective view of an aircraft passenger seat apparatus, in accordance with one or more embodiments of the present disclosure.
FIG. 5B illustrates a front elevation view of an aircraft passenger seat apparatus, in accordance with one or more embodiments of the present disclosure.
FIG. 5C illustrates a rear elevation view of an aircraft passenger seat apparatus, in accordance with one or more embodiments of the present disclosure.
FIG. 5D illustrates a rear perspective view of an aircraft passenger seat apparatus, in accordance with one or more embodiments of the present disclosure.
FIG. 5E illustrates a side elevation view of an aircraft passenger seat apparatus, in accordance with one or more embodiments of the present disclosure.
FIG. 5F illustrates a side elevation view of an aircraft passenger seat apparatus, in accordance with one or more embodiments of the present disclosure.
FIG. 5G illustrates a top elevation view of an aircraft passenger seat apparatus, in accordance with one or more embodiments of the present disclosure.
FIG. 5H illustrates a bottom elevation view of an aircraft passenger seat apparatus, in accordance with one or more embodiments of the present disclosure.

### DETAILED DESCRIPTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination of sub-combination of two or more such features, along with any other features which may not necessarily be expressly described or inherently present in the instant disclosure.

Tray tables disposed within the seatback of aircraft passenger seats allow passengers a surface on which to rest personal items, such as a laptop and a beverage. However, using a tray table to hold a beverage may limit the passenger's ability to utilize the tray table for other purposes or personal items, such as a newspaper or laptop. Additionally, a tray table may only be utilized to hold a beverage when the tray table is in the "open" position. Furthermore, many passengers may begin to feel confined when the tray table is in the "open" position for long periods of time, further limiting their ability to store personal items for such periods of time. Other conventional tray tables have attempted to solve this issue by including a foldable "ring" within the tray table itself, which may be folded down when the tray table is in the "closed" position in order to hold a beverage. However, this conventional design once again limits a passenger's ability to store personal items, as the foldable ring may only be used when the tray table is in the "closed" position.

Accordingly, embodiments of the present disclosure are directed to a seat apparatus (e.g., aircraft passenger seat apparatus) for providing aircraft passengers additional and/or customizable stowage areas for personal items. More particularly, embodiments of the present disclosure are directed to a seat apparatus including one or more accessory stations for receiving couplable accessories (e.g., cupholder accessories, phone holder accessories, and the like). It is contemplated herein that embodiments of the present disclosure may provide aircraft passengers with additional stowage options for stowing personal items, thereby enabling the ability to store/hold beverages and larger personal items (e.g., laptops, tablets) simultaneously.

Reference will now be made in detail to the subject matter disclosed, which is illustrated in the accompanying drawings.

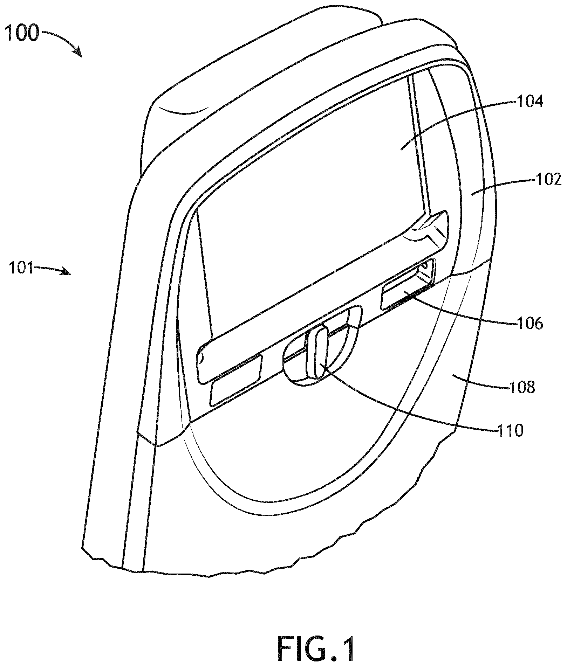

FIG. 1 illustrates a front elevation view of an aircraft passenger seat apparatus 100, in accordance with one or more embodiments of the present disclosure. The aircraft passenger seat apparatus 100 may include, but is not limited to, a seatback panel/bezel 102 and one or more accessory stations 106.

In embodiments, the seatback panel/bezel 102 of the aircraft passenger seat apparatus 100 may be disposed within an aircraft seatback 101 of an aircraft seat. It is noted herein that features provided within aircraft seatbacks may be dependent upon a number of factors including, but not limited to, the airline, the size of aircraft, the model of aircraft, and the like. For example, in some embodiments, the aircraft seatback 101 may include a standard seatback panel/bezel 102. By way of another example, in other embodiments, the aircraft seatback 101 may include display monitor 104 configured to display one or more images in addition to the tray table 108. In this example, the seatback panel 102 may include a display monitor bezel 102. Where an aircraft seatback 101 includes a display monitor 104, the display monitor bezel 102 may be configured to surround at least a portion of the display monitor 104.

It is contemplated herein that one or more accessory stations 106 disposed within the seatback bezel 102 adjacent to the tray table 108 may enable couplable accessories (e.g., cupholder accessories, phone holder accessories, hook accessories) to be disposed within and utilized when the tray table 108 is in both the "open" position and the "closed" position.

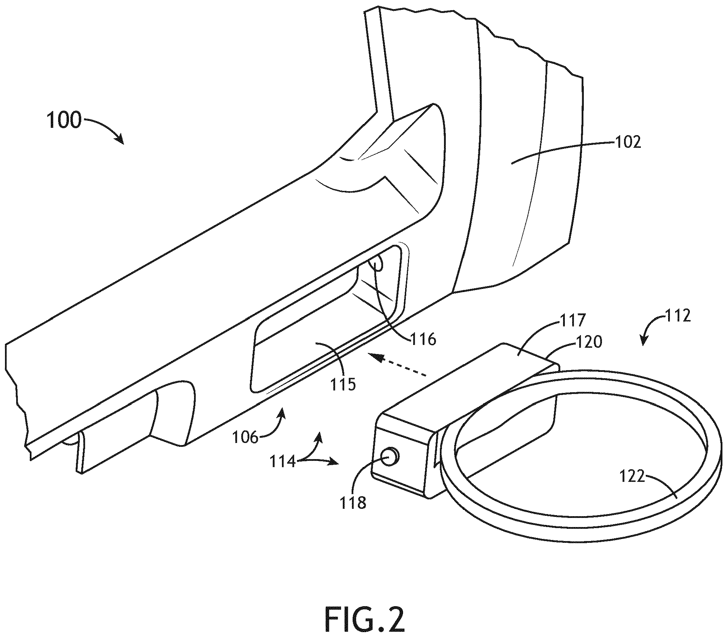

As shown in FIG. 1, the aircraft seatback 101 includes a seatback bezel 102 and a tray table 108. The seatback bezel 102 includes a tray table locking assembly 110 disposed within the seatback bezel 102, wherein the tray table locking assembly 110 is configured to be actuated in order to lock the tray table 108 in a "closed" position, and release the tray table 108 into an "open" position. The one or more accessory stations 106 are disposed within the seatback bezel 102 adjacent to the tray table 108 such that the position/orientation of the one or more accessory stations 106 are not dependent upon the position of the tray table 108. The one or more accessory stations 106 may be further understood with reference to FIG. 2.

FIG. 2 illustrates a perspective view of an accessory station 106 and a couplable accessory 112 of an aircraft passenger seat apparatus 100, in accordance with one or more embodiments of the present disclosure.

In some embodiments, the one or more couplable accessories 112 may include a cupholder accessory 112. For example, as shown in FIG. 2, a couplable accessory 112 may include a cupholder ring 112 coupled to an adapter 120. As will be noted in further detail herein, the one or more couplable accessories 112 may include any couplable accessories known in the art including, but not limited to, a cupholder accessory, a phone holder accessory, a mobile device charger accessory, a hook/bracket accessory (e.g., headphone/ear bud holder), a fan accessory, a light accessory, and the like.

As noted previously herein, the one or more accessory stations 106 may be configured to at least partially receive and/or couple with one or more couplable accessories 112 in order to secure the one or more couplable accessories 112 on/within the seatback bezel 102. In this regard, the one or more accessory stations 106 may include any accessory station known in the art configured to receive couplable accessories 112. The one or more accessory stations 106 includes a plug-in receptacle 106. The one or more plug-in receptacles 106 may be insert-mounted such that the one or more couplable accessories 112 are coupled to the plug-in receptacles 106 and seatback bezel 102 by inserting the couplable accessories 112 within the plug-in receptacles 106.

Not claimed in the present invention, the one or more accessory stations 106 may take any form known in the art in addition to the insert-mounted plug-in receptacle 106 shown and described. For example, in alternative unclaimed examples, the one or more accessory stations 106 may include one or more projections which are couplable to the couplable accessories 112 by fitting into corresponding receptacles within the couplable accessories 112. By way of another unclaimed example, the one or more the one or more accessory stations 106 may include surface-mounted accessory stations 106. For instance, the one or more accessory stations 106 may include one or more brackets, recesses, clips, or snaps configured to engage one or more corresponding recesses, clips, or snaps of the couplable accessories 112. By way of another unclaimed example, the one or more the one or more accessory stations 106 may include surface-mounted accessory stations 106 wherein the one or more couplable accessories 112 engage with the accessory stations 106 via threaded assemblies. By way of another unclaimed example, the one or more accessory stations 106 may include magnetic and/or electromagnetic accessory stations wherein the one or more couplable accessories 112 engage with the accessory stations 106 via corresponding magnets/electromagnets.

In embodiments, the aircraft passenger seat apparatus 100 includes an interfacing assembly 114 configured to securely couple the one or more accessory stations 106 and the one or more couplable accessories 112. In this regard, the one or more couplable accessories 112 are couplable to the one or more accessory stations 106 via an interfacing assembly 114. In embodiments, the interfacing assembly 114 includes a first set of one or more interfacing components 116, where the first set of one or more interfacing components 116 are integrated into the accessory stations 106. In another embodiment, the interfacing assembly 114 includes a second set of one or more interfacing components 118, where the second set of one or more interfacing components 118 are integrated into the couplable accessories 112. In embodiments, the interfacing assembly 114 is configured to secure the one or more couplable accessories 112 to/within the one or more accessory stations 106.

For example, the aircraft passenger seat apparatus 100 may include at least one interfacing component 114 disposed in the one or more accessory stations 106, wherein the at least one interfacing component 114 is configured to engage and mate with at least one interfacing component 118 of one or more couplable accessories 112.

For instance, as shown in FIG. 2, the one or more accessory stations 106 may include one or more plug-in receptacles 106, wherein the one or more couplable accessories 112 are insertable and couplable to the one or more plug-in accessories 106. The plug-in receptacles 106 may include one or more interior surfaces 115 which are configured to interface with and/or engage one or more exterior surfaces 117 of an adapter 120 of the couplable accessories 112. In this example, the plug-in receptacle 106 may include a first set of one or more interfacing components 116 of an interfacing assembly 114 disposed within the one or more interior surfaces 115. The interfacing assembly 114 may further include a second set of one or more interfacing components 118 disposed on the one or more exterior surfaces 117 of the adapter 120 of the couplable accessory 112. The first set of one or more interfacing components 116 may be configured to engage and mate with the second set of one or more interfacing components 118 in order to secure the couplable accessory 112 within the plug-in receptacle 106.

In embodiments, the interfacing assembly 114 may include any interfacing assembly 114 known in the art configured to secure the one or more couplable accessories 112 within/on the one or more accessory stations 106 (e.g., plug-in receptacles 106). For example, the interfacing assembly 114 may include, but is not limited to, a tongue-and-groove interlocking assembly, a tab-and-slot interlocking assembly, a magnetic interfacing assembly, and the like.

For example, the one or more interfacing components 116, 118 of the interfacing assembly 114 may include one or more mechanically interlocking components. For instance, the first set of one or more interfacing components 116 of the accessory stations 106 may include one or more detents, and the second set of one or more interfacing components 118 of the couplable accessories 112 may include one or more tabs, wherein the one or more detents of the accessory stations 106 are configured to engage and mate with the one or more tabs of the couplable accessories 112 in order to secure the couplable accessories 112 to and/or within the accessory stations 106. In this regard, the one or more interfacing components 116, 118 may include any sets of mechanical interlocking components known in the art including, but not limited to, grooves, ridges, tabs, detents, threads, and the like.

By way of another example, the sets of one or more interfacing components 116, 118 may include magnetic interfacing components (e.g., magnets). For instance, the first set of one or more interfacing components 116 of the accessory stations 106 may include one or more magnets, and the second set of one or more interfacing components 118 of the couplable accessories 112 may also include one or more magnets, wherein the one or more magnets of the accessory stations 106 are configured to engage and mate with the one or more magnets of the couplable accessories 112 in order to secure the couplable accessories 112 to and/or within the accessory stations 106.

In some embodiments, the one or more accessory stations 106 may be fabricated to exhibit standard/uniform (or substantially uniform) structural characteristics such that couplable accessories 112 may be readily replaced, swapped, or interchanged. Structural characteristics of accessory stations 106 which may be standard/uniform between various accessory stations 106 may include, but are not limited to, shape, dimensions, size, material, interfacing components 116, and the like. For example, an aircraft passenger seat apparatus 100 may include a first accessory station 106a (e.g., first plug-in receptacle 106a) with a first set of structural characteristics, and a second accessory station 106b (e.g., second plug-in receptacle 106b) with a second set of structural characteristics which are identical to the first set of structural characteristics.

Similarly, in other embodiments, the one or more couplable accessories 112 may be fabricated to exhibit standard/uniform (or substantially uniform) structural characteristics such that couplable accessories 112 may be readily replaced, swapped, or interchanged within the various accessory stations 106. For example, each couplable accessory 112 of the one or more couplable accessories 112 may each be fabricated to include an adapter 120 with identical structural characteristics which are configured to engage with the accessory stations 106. Structural characteristics of couplable accessories 112 which may be standard/uniform between various couplable accessories 112 may include, but are not limited to, shape, dimensions, size, material, interfacing components 118, and the like.

It is contemplated herein that fabricating accessory stations 106 and/or couplable accessories 112 with standard, uniform, and/or corresponding structural characteristics may enable improved passenger flexibility and storage options. For example, a passenger may receive (or purchase) a plurality of couplable accessories 112 which may be utilized, including a cupholder accessory 112, a phone holder accessory 112, and a hook/bracket accessory 112 for holding headphones and trash bags. By fabricating each of the couplable accessories 112 with an adapter 120 which exhibits standard/uniform structural characteristics, the various couplable accessories 112 may be readily swapped and replaced dependent upon the passenger's immediate storage needs. Furthermore, a standard/uniform adapter 120 may enable the efficient fabrication of additional/alternative couplable accessories 112 designed for any number of purposes or functions.

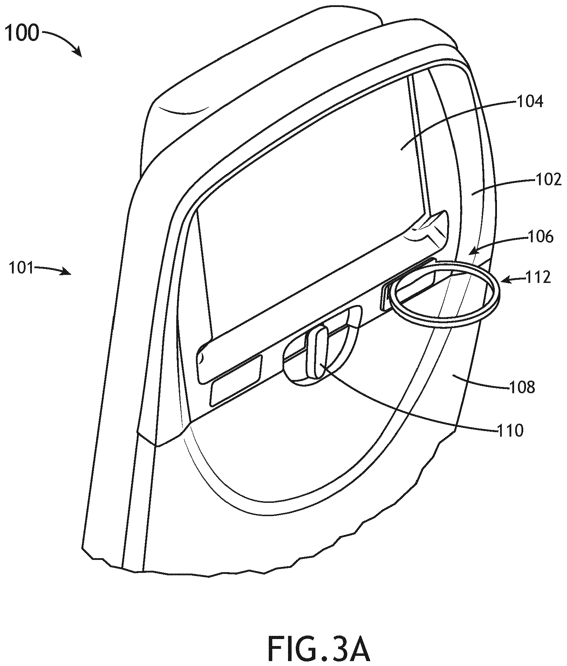

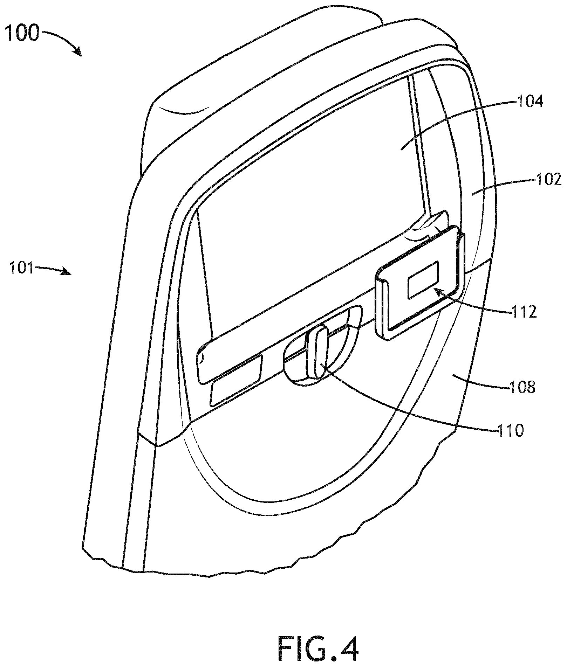

FIGS. 3A-3B illustrates a perspective view of an aircraft passenger seat apparatus 100 including a cupholder accessory 112 (e.g., couplable accessory 112), in accordance with one or more embodiments of the present disclosure. FIG. 4 illustrates a perspective view of an aircraft passenger seat apparatus 100 including a phone holder accessory 112 (e.g., couplable accessory 112), in accordance with one or more embodiments of the present disclosure.

As noted previously herein, the one or more couplable accessories 112 may include any couplable accessories known in the art including, but not limited to, a cupholder accessory, a phone holder accessory, a mobile device charger accessory, a hook/bracket accessory, a fan accessory, a light accessory, and the like. For example, as shown in FIGS. 3A-3B, a couplable accessory 112 may include a cupholder accessory 112 configured to hold/secure a beverage/cup 113. It is contemplated herein that the cupholder assembly 112 illustrated in FIGS. 2-3B may more efficiently secure/hold a beverage/cup 113 than simply placing the beverage/cup 113 on the tray table 108, particularly in the event of turbulence. By way of another example, as shown in FIG. 4, a couplable accessory 112 may include a phone holder accessory 112 configured to hold/secure a mobile phone or other mobile device.

In some embodiments, the interfacing assembly 114 is configured to secure the one or more couplable accessories 112 within the one or more accessory stations 106 until an external force acts upon the one or more couplable accessories 112. More particularly, in some embodiments, the interfacing assembly 114 may be configured to resist some external forces to retain the couplable accessories 112 securely within the accessory stations 106 (e.g., plug-in receptacles 106), and allow other external forces to remove or un-secure the couplable accessories 112 from the accessory stations 106.

For example, the interfacing assembly 114 may be configured to secure the one or more couplable accessories 112 within the one or more accessory stations 106 until an external force which is orthogonal (or substantially orthogonal) to the seatback panel/bezel 102 and/or aircraft seatback 101 acts upon the one or more couplable accessories 112. For instance, the interfacing assembly 114 may be configured to secure the one or more couplable accessories 112 within the one or more accessory stations 106 until an external force "pulling" the couplable accessory 112 from the seatback panel 102 acts upon the one or more couplable accessories 112.

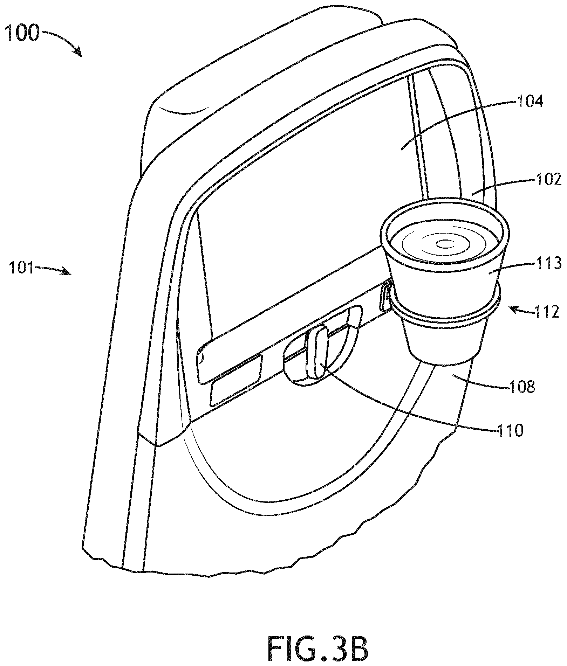

Conversely, by way of another example, the interfacing assembly 114 may be configured to secure the one or more couplable accessories 112 within the one or more accessory stations 106 and resist other external forces. In this regard, a first external force acting in a first direction orthogonal (or substantially orthogonal) to the seatback panel/bezel 102 may be configured to remove/un-couple a couplable accessory 112 from an accessory station 106. Comparatively, the interfacing assembly 114 may resist a second external force acting in a second direction parallel (or substantially parallel) to the seatback panel/bezel 102, such that the second external force is not configured to remove/un-couple the couplable accessory 112 from the accessory station 106. For instance, as shown in FIG. 3B, a beverage/cup 113 disposed within a cupholder accessory 112 may exert a "downwards" external force on the cupholder accessory 112 which is parallel (or substantially parallel) to the aircraft seatback 101. In this example, the interfacing assembly 114 may be configured to resist the downwards external force and retain the cupholder accessory 112 securely within the plug-in receptacle 106.

In embodiments with a phone holder accessory 112, as shown in FIG. 4, the aircraft passenger seat apparatus 100 may further include one or more electronic components configured to be communicatively coupled to an electronic device (e.g., phone, mobile phone, tablet, and the like) held by the phone holder accessory 112. For example, in FIG. 4, the aircraft passenger seat apparatus 100 may further include one or more wireless chargers disposed within the seatback bezel 102, wherein the one or more wireless chargers are configured to wirelessly charge a mobile device disposed within the phone holder accessory 112. For instance, one or more wireless chargers may be disposed behind a rear surface of the plug-in receptacle 106 and/or behind a surface of the seatback bezel 102 such that it may wirelessly charge a mobile device disposed within the phone holder accessory 102. The one or more wireless chargers may be configured to wirelessly charge a mobile device using any wireless technique known in the art including, but not limited to, wireless inductive charging.

In additional and/or alternative embodiments, the one or more accessory stations 106 may include electrical connections configured to electrically interface with one or more electrical connections within the one or more couplable assemblies 112. For example, a rear surface of the plug-in receptacle 106 shown in FIG. 2 may include one or more electrical connections electrically coupled to a power source. Additionally, the adaptor 120 of the cupholder accessory 112 may also include one or more electrical connections on an exterior surface 117 of the adaptor 120 which are configured to electrically interface with the one or more electrical connections within the plug-in receptacle 106. It is noted herein that providing electrical connections between a power source and the couplable accessories 112 may enable powered accessories, such as phone charger accessories 112, fan accessories 112, light accessories 112, and the like. In additional and/or alternative embodiments, as noted previously herein, wireless communicative couplings (e.g., inductive couplings) may be used to enable powered couplable accessories 112.

In some embodiments, the aircraft passenger seat apparatus 100 may include one or more electronic components which are electrically coupled to the display monitor 104. For example, the aircraft passenger seat apparatus 100 may include one or more electronic components disposed within the display monitor bezel 102 (e.g., seatback panel/bezel 102). The one or more electronic components may include, but are not limited to, a controller, a power source, processors, memory, communication interfaces, and the like. The one or more electronic components may be electrically coupled to the display monitor 104 via any wired or wireless communication coupling known in the art. In another embodiment, the one or more electronic components may be further configured to facilitate a communicative coupling between a mobile device (e.g., phone, mobile phone, tablet) held by and/or disposed in a phone holder accessory 112. Similarly, the one or more electronic components may be configured to form a communicative coupling with the mobile device held by the phone holder accessory 112 via any wired or wireless communication coupling known in the art. For example, the communicative coupling may be formed via one or more electrical connections interfacing between the accessory stations 106 and adapters 120. By way of another example, the communicative coupling may include, but is not limited to, an inductive coupling, a Bluetooth coupling, and the like.

For example, the aircraft passenger seat apparatus 100 may include one or more electronic components disposed within the display monitor bezel 102. The one or more electronic components may be electrically coupled to the display monitor 104, and may be additionally configured to form a communicative coupling with a mobile device held by a couplable accessory 112 (e.g., phone holder accessory 112) disposed within the one or more accessory stations 106, as shown in FIG. 4. The one or more electronic components may be electrically coupled to the display monitor 104 and/or the mobile device via any wired or wireless communication coupling known in the art. Upon communicatively coupling with one or more electronic components, the one or more electronic components may be configured to generate one or more control signals configured to cause the display monitor 104 to display one or more images based on the communicative coupling. For instance, the one or more electronic components may be configured to cause the display monitor to mirror the images shown on a display substrate of the mobile device via the communicative coupling.

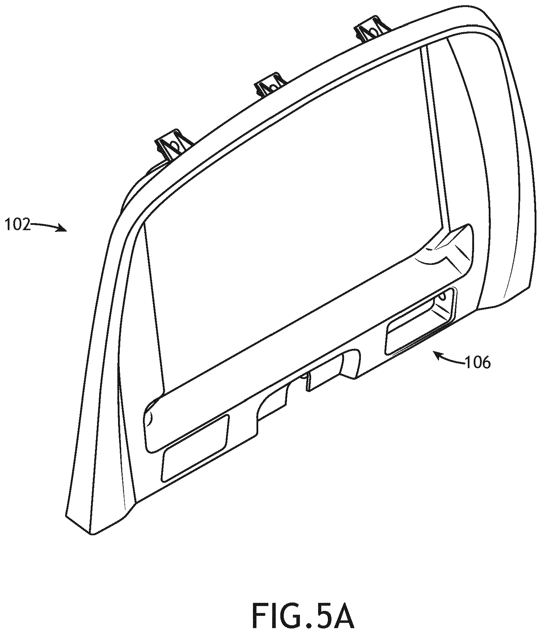

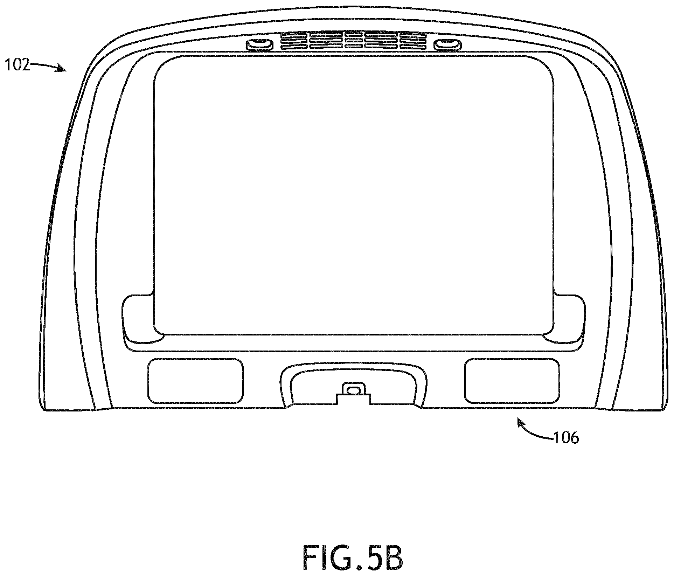

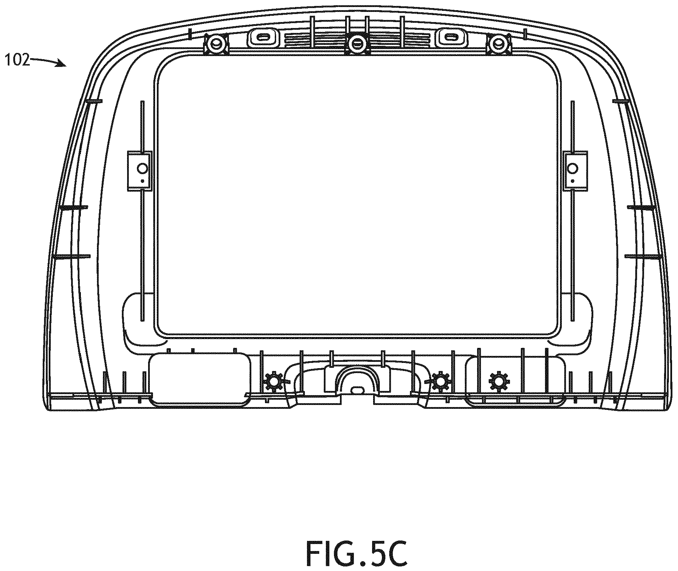

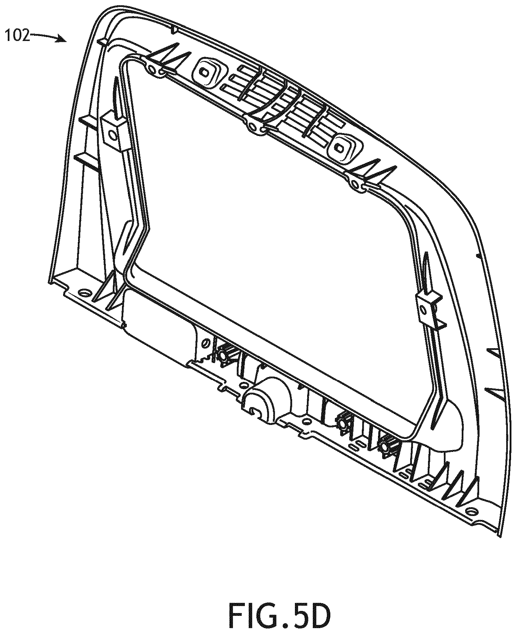

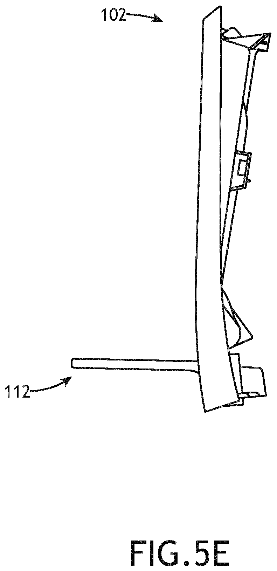

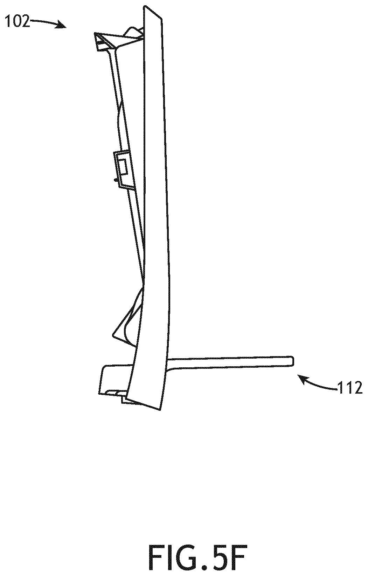

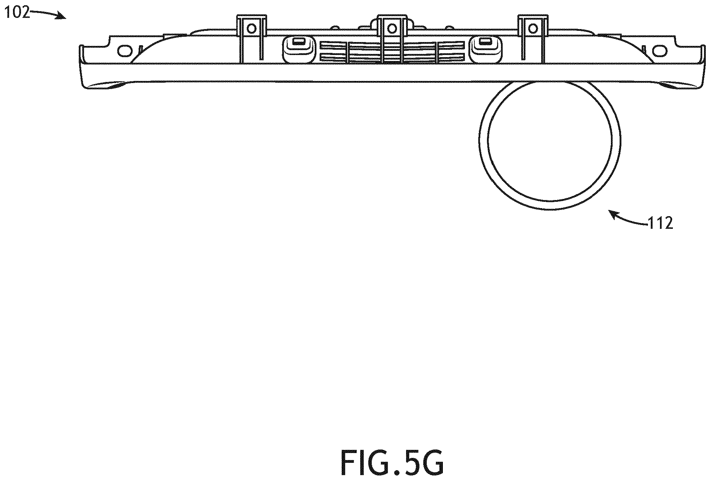

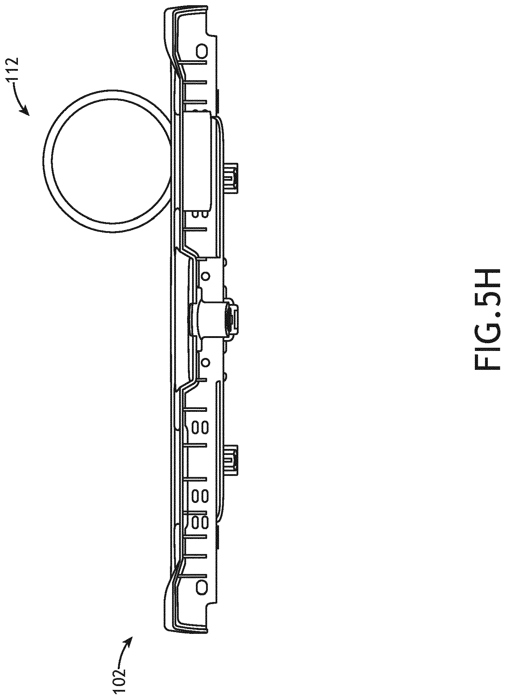

FIG. 5A illustrates a front perspective view of an aircraft passenger seat apparatus 100, in accordance with one or more embodiments of the present disclosure. FIG. 5B illustrates a front elevation view of an aircraft passenger seat apparatus 100, in accordance with one or more embodiments of the present disclosure. FIG. 5C illustrates a rear elevation view of an aircraft passenger seat apparatus 100, in accordance with one or more embodiments of the present disclosure. FIG. 5D illustrates a rear perspective view of an aircraft passenger seat apparatus 100, in accordance with one or more embodiments of the present disclosure. FIG. 5E illustrates a side elevation view of an aircraft passenger seat apparatus 100, in accordance with one or more embodiments of the present disclosure. FIG. 5F illustrates a side elevation view of an aircraft passenger seat apparatus 100, in accordance with one or more embodiments of the present disclosure. FIG. 5G illustrates a top elevation view of an aircraft passenger seat apparatus 100, in accordance with one or more embodiments of the present disclosure. FIG. 5H illustrates a bottom elevation view of an aircraft passenger seat apparatus 100, in accordance with one or more embodiments of the present disclosure.

Although example embodiments of the present disclosure are shown and described in an aircraft environment, the inventive concepts of the present disclosure may be configured to operate in alternative and/or additional contexts, unless noted otherwise herein. In this regard, the aircraft passenger seat apparatus 100 may instead may be installed and/or configured or dimensioned to fit on any seat of any type of vehicle known in the art that has seats which are positioned in front of one another. For example, the aircraft passenger seat apparatus 100 (more generally "seat apparatus 100") may be implemented into the seats of any air, land, or water-based personal equipment or vehicle; any air, land, or water-based commercial equipment or vehicle; any air, land, or water-based military equipment or vehicle known in the art. Additionally, it is noted herein the seat apparatus 100 of the present disclosure may be installed and/or configured or dimensioned to fit on any seat within a home or a business. For example, the seat apparatus 100 may be installed and/or configured or dimensioned to fit on a seat in auditoriums, movie theatres, sports venues (e.g., baseball parks, arenas, or other venues having installed seats, or the like), where the seats are arranged in front of one other. Therefore, the above description should not be interpreted as a limitation on the disclosure but merely an illustration.

It is further noted herein that, where the environment includes an aircraft environment, it is noted herein the embodiments of aircraft passenger seat apparatus 100 may be configured in accordance with avionics guidelines and/or standards put forth by, but not limited to, the Federal Aviation Administration (FAA), the European Aviation Safety Agency (EASA) or any other flight certification agency or organization; the American National Standards Institute (ANSI), Aeronautical Radio, Incorporated (ARINC), or any other standards setting organization or company; the Radio Technical Commission for Aeronautics (RTCA) or any other guidelines agency or organization; or the like.

Components illustrated and described herein are merely examples of a system/device and components that may be used to implement embodiments of the inventive concepts without departing from the scope of the claims. Furthermore, any dimensions, degrees, and/or numerical ranges provided herein are to be understood as non-limiting examples unless otherwise specified in the claims.

## Claims

1. An aircraft passenger seat apparatus, comprising:
a seatback bezel (102) disposed in a rear surface of an aircraft seatback (101);
a display monitor (104) disposed within the aircraft seatback, the display monitor configured to display one or more images;
one or more accessory stations (106) disposed in the seatback bezel that at least partially receive and couple with one or more couplable accessories (112), the one or more accessory stations comprising one or more plug-in receptacles;
a tray table locking assembly (110) disposed within the seatback bezel, wherein the tray table locking assembly is configured to be actuated in order to lock a tray table (108) in a closed position and release the tray table into an open position; and
the one or more accessory stations (106) being adjacent the tray table locking assembly (110) so to be configured to be disposed adjacent the tray table (108) and between the display monitor (104) and the tray table (108); and
at least one interfacing component (118) of an interfacing assembly (114) disposed in the one or more couplable accessories, the at least one interfacing component engaging and mating with at least one interfacing component of the one or more plug-in receptacles,
wherein the interfacing assembly (114) is configured to secure the one or more couplable accessories within the one or more accessory stations until an external force acts upon the one or more couplable accessories, **characterized in that** the interfacing assembly (114) is configured to secure the one or more couplable accessories (112) within the one or more accessory stations (106) when the tray table (108) is in the closed position and when the tray table is in the open position.

2. The aircraft passenger seat apparatus of Claim 1, wherein the at least one interfacing component (118) of the one or more accessory stations (106) are disposed within an interior surface of the one or more plug-in receptacles.

3. The aircraft passenger seat apparatus of Claim 2, wherein the at least one interfacing component (118) comprises at least one interlocking component, the at least one interlocking component including at least one of a groove, a detent, or a tab.

4. The aircraft passenger seat apparatus of any preceding Claim, wherein the interfacing assembly comprises at least one of a magnetic interfacing assembly, a tongue-and-groove interlocking assembly, or a tab-and-slot interlocking assembly.

5. The aircraft passenger seat apparatus of any preceding Claim, wherein the one or more couplable accessories comprise a cupholder accessory (112).

6. The aircraft passenger seat apparatus of any preceding Claim, wherein the one or more couplable accessories comprise a phone holder accessory (112).

7. The aircraft passenger seat apparatus of Claim 6, further comprising one or more wireless chargers disposed within the seatback bezel, the one or more wireless chargers configured to wirelessly charge a mobile device disposed within the phone holder accessory.

8. The aircraft passenger seat apparatus of any preceding Claim, wherein the seatback bezel comprises a display monitor bezel (102), wherein the display monitor bezel surrounds at least a portion of the display monitor.

9. The aircraft passenger seat apparatus of Claim 8, further comprising one or more electronic components disposed within the display monitor bezel, the one or more electronic components electrically coupled to the display monitor.

10. The aircraft passenger seat apparatus of Claim 9, wherein the one or more electronic components are configured to:
form a communicative coupling with a mobile device held by a couplable accessory disposed within the one or more accessory stations, and
generate one or more control signals configured to cause the display monitor to display one or more images based on the communicative coupling.

11. The aircraft passenger seat apparatus of any preceding Claim, wherein the one or accessory stations comprise a first accessory station with a first set of structural characteristics, and a second accessory station including a second set of structural characteristics identical to the first set of structural characteristics.

12. The aircraft passenger seat apparatus of any preceding Claim, wherein the external force comprises an external force which is substantially orthogonal to the aircraft seatback.

13. The aircraft passenger seat apparatus of any preceding Claim, wherein the one or more accessory stations are disposed within the seatback bezel adjacent to a tray table disposed on the aircraft seatback.

## Patentansprüche

1. Flugzeugpassagiersitzvorrichtung, umfassend:
eine Rückenlehnenblende (102), die in einer hinteren Fläche einer Flugzeugrückenlehne (101) angeordnet ist;
einen Anzeigemonitor (104), der innerhalb der Flugzeugrückenlehne angeordnet ist, wobei der Anzeigemonitor dazu konfiguriert ist, ein oder mehrere Bilder anzuzeigen;
eine oder mehrere Zubehörstationen (106), die in der Rückenlehnenblende angeordnet sind und ein oder mehrere koppelbare Zubehöre (112) mindestens teilweise aufnehmen und mit diesen gekoppelt werden können, wobei die eine oder mehreren Zubehörstationen eine oder mehrere Steckaufnahmen umfassen;
eine Ablagetisch-Verriegelungsbaugruppe (110), die innerhalb der Rückenlehnenblende angeordnet ist, wobei die Ablagetisch-Verriegelungsbaugruppe dazu konfiguriert ist, betätigt zu werden, um einen Ablagetisch (108) in einer geschlossenen Position zu verriegeln und den Ablagetisch in eine offene Position freizugeben; und
wobei sich eine oder mehrere Zubehörstationen (106) benachbart zu der Ablagetisch-Verriegelungsbaugruppe (110) befinden, sodass sie dazu konfiguriert sind, benachbart zu dem Ablagetisch (108) und zwischen dem Anzeigemonitor (104) und dem Ablagetisch (108) angeordnet zu sein; und
mindestens eine Schnittstellenkomponente (118) einer Schnittstellenbaugruppe (114), die in dem einen oder den mehreren koppelbaren Zubehören angeordnet ist, wobei die mindestens eine Schnittstellenkomponente mit mindestens einer Schnittstellenkomponente der einen oder mehreren Steckaufnahmen in Eingriff steht und mit dieser zusammenpasst,
wobei die Schnittstellenbaugruppe (114) dazu konfiguriert ist, das eine oder die mehreren koppelbaren Zubehöre innerhalb der einen oder der mehreren Zubehörstationen zu sichern, bis eine externe Kraft auf das eine oder die mehreren koppelbaren Zubehöre einwirkt, **dadurch gekennzeichnet, dass** die Schnittstellenbaugruppe (114) dazu konfiguriert ist, das eine oder die mehreren koppelbaren Zubehöre (112) innerhalb der einen oder der mehreren Zubehörstationen (106) zu sichern, wenn sich der Ablagetisch (108) in der geschlossenen Position befindet und wenn sich der Ablagetisch in der offenen Position befindet.

2. Flugzeugpassagiersitzvorrichtung nach Anspruch 1, wobei die mindestens eine Schnittstellenkomponente (118) der einen oder mehreren Zubehörstationen (106) innerhalb einer Innenfläche der einen oder mehreren Steckaufnahmen angeordnet ist.

3. Flugzeugpassagiersitzvorrichtung nach Anspruch 2, wobei die mindestens eine Schnittstellenkomponente (118) mindestens eine Verriegelungskomponente umfasst, wobei die mindestens eine Verriegelungskomponente mindestens eines von einer Nut, einer Rastnase oder einer Lasche beinhaltet.

4. Flugzeugpassagiersitzvorrichtung nach einem der vorhergehenden Ansprüche, wobei die Schnittstellenbaugruppe mindestens eines von einer magnetischen Schnittstellenbaugruppe, einer Nut- und Feder-Verriegelungsbaugruppe oder einer Laschen- und Schlitz-Verriegelungsbaugruppe umfasst.

5. Flugzeugpassagiersitzvorrichtung nach einem der vorhergehenden Ansprüche, wobei das eine oder die mehreren koppelbaren Zubehöre ein Getränkehalterzubehör (112) umfassen.

6. Flugzeugpassagiersitzvorrichtung nach einem der vorhergehenden Ansprüche, wobei das eine oder die mehreren koppelbaren Zubehöre ein Telefonhalterzubehör (112) umfassen.

7. Flugzeugpassagiersitzvorrichtung nach Anspruch 6, ferner umfassend ein oder mehrere drahtlose Ladegeräte, die innerhalb der Rückenlehnenblende angeordnet sind, wobei das eine oder die mehreren drahtlosen Ladegeräte zum drahtlosen Laden einer in dem Telefonhalterzubehör angeordneten Mobilvorrichtung konfiguriert sind.

8. Flugzeugpassagiersitzvorrichtung nach einem der vorhergehenden Ansprüche, wobei die Rückenlehnenblende eine Anzeigemonitorblende (102) umfasst, wobei die Anzeigemonitorblende mindestens einen Abschnitt des Anzeigemonitors umgibt.

9. Flugzeugpassagiersitzvorrichtung nach Anspruch 8, ferner umfassend eine oder mehrere elektronische Komponenten, die innerhalb der Anzeigemonitorblende angeordnet sind, wobei die eine oder mehreren elektronischen Komponenten elektrisch mit dem Anzeigemonitor gekoppelt sind.

10. Flugzeugpassagiersitzvorrichtung nach Anspruch 9, wobei die eine oder mehreren elektronischen Komponenten zu Folgendem konfiguriert sind:
Bilden einer kommunikativen Kopplung mit einer Mobilvorrichtung, die von einem koppelbaren Zubehör gehalten wird, das innerhalb der einen oder mehreren Zubehörstationen angeordnet ist, und
Generieren eines oder mehrerer Steuersignale, die dazu konfiguriert sind, den Anzeigemonitor zu veranlassen, ein oder mehrere Bilder basierend auf der kommunikativen Kopplung anzuzeigen.

11. Flugzeugpassagiersitzvorrichtung nach einem der vorhergehenden Ansprüche, wobei die eine oder mehreren Zubehörstationen eine erste Zubehörstation mit einem ersten Satz struktureller Merkmale und eine zweite Zubehörstation umfassen, die einen zweiten Satz struktureller Merkmale beinhaltet, der mit dem ersten Satz struktureller Merkmale identisch ist.

12. Flugzeugpassagiersitzvorrichtung nach einem der vorhergehenden Ansprüche, wobei die externe Kraft eine externe Kraft umfasst, die im Wesentlichen orthogonal zur Flugzeugrückenlehne ist.

13. Flugzeugpassagiersitzvorrichtung nach einem der vorhergehenden Ansprüche, wobei die eine oder mehreren Zubehörstationen innerhalb der Rückenlehnenblende benachbart zu einem Ablagetisch angeordnet sind, der an der Flugzeugrückenlehne angeordnet ist.

## Revendications

1. Appareil de sièges passagers d'aéronef, comprenant :
un cadre d'affichage de dossier de siège (102) disposé dans une surface arrière d'un dossier de siège d'aéronef (101) ;
un moniteur d'affichage (104) disposé à l'intérieur du dossier de siège de l'aéronef, le moniteur d'affichage étant configuré pour afficher une ou plusieurs images ;
une ou plusieurs stations d'accessoires (106) disposées dans le cadre du dossier de siège qui reçoivent et se couplent au moins partiellement à un ou à plusieurs accessoires pouvant être couplés (112), les une ou plusieurs stations d'accessoires comprenant un ou plusieurs réceptacles plugiciels ;
un ensemble de verrouillage de tablette (110) disposé à l'intérieur du cadre d'affichage de dossier de siège, dans lequel l'ensemble de verrouillage de tablette est configuré pour être actionné afin de verrouiller une tablette (108) dans une position fermée et de libérer la tablette dans une position ouverte ; et
les une ou plusieurs stations accessoires (106) étant adjacentes à l'ensemble de verrouillage de tablette (110) de manière à être configurées pour être disposées de manière adjacente à la tablette (108) et entre le moniteur d'affichage (104) et la tablette (108) ; et
au moins un composant d'interface (118) d'un ensemble d'interface (114) disposé dans les un ou plusieurs accessoires pouvant être couplés, l'au moins un composant d'interface venant en prise et s'accouplant avec au moins un composant d'interface des un ou plusieurs réceptacles plugiciels,
dans lequel l'ensemble d'interface (114) est configuré pour fixer les un ou plusieurs accessoires pouvant être couplés dans les une ou plusieurs stations d'accessoires jusqu'à ce qu'une force externe agisse sur les un ou plusieurs accessoires pouvant être couplés, **caractérisé en ce que** l'ensemble d'interface (114) est configuré pour fixer les un ou plusieurs accessoires pouvant être couplés (112) dans les une ou plusieurs stations d'accessoires (106) lorsque la tablette (108) est en position fermée et lorsque la tablette est en position ouverte.

2. Appareil de siège de passager d'aéronef selon la revendication 1, dans lequel l'au moins un composant d'interface (118) des une ou plusieurs stations accessoires (106) sont disposés à l'intérieur d'une surface intérieure des un ou plusieurs réceptacles plugiciels.

3. Appareil de siège de passager d'aéronef selon la revendication 2, dans lequel l'au moins un composant d'interface (118) comprennent au moins un composant de verrouillage, l'au moins un composant de verrouillage comportant au moins l'un d'une rainure, d'un cliquet ou d'une languette.

4. Appareil de siège de passager d'aéronef selon une quelconque revendication précédente, dans lequel l'ensemble d'interface comprend au moins l'un d'un ensemble d'interface magnétique, d'un ensemble de verrouillage à languette et rainure, ou d'un ensemble de verrouillage à languette et fente.

5. Appareil de siège pour passager d'aéronef selon une quelconque revendication précédente, dans lequel les un ou plusieurs accessoires pouvant être couplés comprennent un accessoire porte-gobelet (112).

6. Appareil de siège pour passager d'aéronef selon une quelconque revendication précédente, dans lequel les un ou plusieurs accessoires pouvant être couplés comprennent un accessoire porte-téléphone (112).

7. Appareil de siège de passager d'aéronef selon la revendication 6, comprenant également un ou plusieurs chargeurs sans fil disposés à l'intérieur d'un cadre d'affichage de dossier de siège, les un ou plusieurs chargeurs sans fil étant configurés pour charger sans fil un appareil mobile disposé à l'intérieur de l'accessoire porte-téléphone.

8. Appareil de siège de passager d'aéronef selon une quelconque revendication précédente, dans lequel le cadre d'affichage de dossier de siège comprend un cadre de moniteur d'affichage (102), dans lequel le cadre de moniteur d'affichage entoure au moins une partie du moniteur d'affichage.

9. Appareil de siège de passager d'aéronef selon la revendication 8, comprenant également un ou plusieurs composants électroniques disposés à l'intérieur du cadre du moniteur d'affichage, les un ou plusieurs composants électroniques étant couplés électriquement au moniteur d'affichage.

10. Dispositif de siège pour passager d'aéronef selon la revendication 9, dans lequel les un ou plusieurs composants électroniques sont configurés pour :
former un couplage communicatif avec un dispositif mobile maintenu par un accessoire pouvant être couplé disposé dans les une ou plusieurs stations accessoires, et
générer un ou plusieurs signaux de commande configurés pour amener le moniteur d'affichage à afficher une ou plusieurs images sur la base du couplage communicatif.

11. Appareil de siège pour passager d'aéronef selon une quelconque revendication précédente, dans lequel les une ou plusieurs stations accessoires comprennent une première station accessoire avec un premier ensemble de caractéristiques structurelles, et une seconde station accessoire comportant un second ensemble de caractéristiques structurelles identiques au premier ensemble de caractéristiques structurelles.

12. Appareil de siège de passager d'aéronef selon une quelconque revendication précédente, dans lequel la force externe comprend une force externe qui est sensiblement orthogonale au dossier du siège d'aéronef.

13. Appareil de siège de passager d'aéronef selon une quelconque revendication précédente, dans lequel les une ou plusieurs stations accessoires sont disposées à l'intérieur d'un cadre d'affichage de dossier de siège adjacent à une tablette disposée sur le dossier de siège d'aéronef.
